**Europäisches Patentamt**

**European Patent Office**

**Office européen des brevets**

(11) Publication number: **0 120 849**
**B1**

# EUROPEAN PATENT SPECIFICATION

(45) Date of publication of patent specification: **27.05.87**

(51) Int. Cl.⁴: **C 04 B 35/58**

(21) Application number: **82903514.6**

(22) Date of filing: **30.09.82**

(86) International application number:
**PCT/US82/01376**

(87) International publication number:
**WO 84/01373 12.04.84 Gazette 84/10**

(54) **METHOD OF MAKING HIGH STRENGTH HOT PRESSED SILICON NITRIDE.**

(43) Date of publication of application:
**10.10.84 Bulletin 84/41**

(45) Publication of the grant of the patent:
**27.05.87 Bulletin 87/22**

(84) Designated Contracting States:
**DE FR GB NL**

(56) References cited:
**WO-A-82/04245 .**
**GB-A-1 340 696**
**GB-A-1 393 579**
**GB-A-2 045 807**
**US-A-3 455 682**
**US-A-4 119 690**
**US-A-4 143 107**
**US-A-4 256 688**
**US-A-4 264 550**
**US-A-4 285 895**
**US-A-4 314 961**

(73) Proprietor: **Ford Motor Company**
**The American Road**
**Dearborn, MI 48121 (US)**
(84) **NL**

(73) Proprietor: **FORD MOTOR COMPANY LIMITED**
**Eagle Way**
**Brentwood Essex CM13 3BW (GB)**
(84) **GB**

(73) Proprietor: **FORD-WERKE**
**AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(72) Inventor: **EZIS, Andre**
**23235 West River Road**
**Grosse Ile, MI 48138 (US)**
Inventor: **BECKWITH, Elaine, C.**
**13716 Hamilton**
**Riverview, MI 48192 (US)**

Courier Press, Leamington Spa, England.

**0 120 849**

(74) Representative: **Messulam, Alec Moses et al**
**A. Messulam & Co. 24 Broadway**
**Leigh on Sea Essex SS9 1BN (GB)**

## Description

This invention is directed to the art of making silicon nitride from silicon powder as a starting material, the powder and selected densification aids are subjected to a reactive nitriding gas to form a mixed phase (alpha and beta) silicon nitride body, the body being then hot pressed. The prior art has consistently measured the mean particle size of powder ingredients (including silicon powder and oxygen carrying agents such as MgO) for making a hot pressed silicon nitride body (see U.S. patents 3,839,541; 3,839,540; and 3,591,337). This allows a truncated particle size distribution permitting some, but still significant, particles larger than the mean size and, of course, several particles smaller than the mean. Such distribution, based on a mean measurement along with a known communition mode, has been useful because it correlated well with packing efficiency for making a cold compacted preform with good density. Unfortunately, the presence of several large particles tolerated by a mean particle size measurement, permits an increased number of flaws to form in the resultant silicon nitride product. The average Weibull characteristic strength (modulus of rupture) is about $0.69 \times 10^6$ kPa (100000 psi) for a silicon nitride product formed with only mean particle size control.

U.K. Patent 1,340,696 discloses a method of manufacturing silicon nitride products comprising the steps of forming a compact of silicon and a fluxing agent which compact has a density between 1.1 and 1.7 g/cm³ heating the compact in a nitriding atmosphere to produce a silicon nitride body and hot pressing the silicon body to produce a silicon nitride product.

Even though mean particle size control, as per the prior art, failed to control flaw formation in the final product, the broad particle size distribution did facilitate greater packing efficiency when consolidating the powders under pressure. It would be useful if a method were available which not only eliminated much of the present flaws in a silicon nitride hot pressed product which tend to hold the Weibull characteristic strength level to no greater than $0.69 \times 10^6$ kPa (100000 psi), but also would not reduce the packing efficiency of the powder ingredients if a special compression ratio was desired.

According to the present invention there is provided a method of making hot pressed silicon nitride comprising object useful as a cutting tool, comprising the steps of forming a powder mixture of silicon and reactive oxygen carrying agents, compacting said mixture to form a preform, heating said preform in a nitriding atmosphere to substantially fully react the ingredients of said mixture with said atmosphere to form a body consisting substantially of silicon nitride and hot pressing said nitrided body to produce a silicon nitride comprising object of desired dimension and density useful as a cutting tool, characterised in that said mixture is dry or jet milled to an absolute particle size distribution having substantially no particle greater than 16 micrometers and said step of compacting providing the preform having a density of about 1.0 g/cm³.

Preferably, the reactive oxygen carrying agents are selected from the group consisting of $Y_2O_3$, MgO, $CeO_2$, $ZrO_2$ and $Al_2O_3$. The amount of the oxygen carrying agents permitted in the mixture is preferably limited to (percent by weight of the mixture); 3.2—16% $Y_2O_3$ and 0.4—4% $Al_2O_3$. Optimally, the maximum absolute particle size of the oxygen carrying agents should be substantially less than the maximum silicon particle size.

The mixture can additionally contain a silicon nitride composite in an amount of 2—25% by weight of said mixture, said silicon nitride composite increasing the particle packing efficiency, increasing green density to about 1.4 g/cm³, and decreasing the hot pressing compression ratio.

The silicon nitride object resulting from the practice of this method will possess improved physical properties, specifically four point flexural strengths in excess of $1.03 \times 10^6$ kPa (150000 psi) at room temperature and hardness (45-N) of 92. The room temperature flexural four point bend strength was determined in an Instron machine (Model 1122) using a self aligning steel fixture with an outer span of 19.05 mm (0.750'') and an inner span of 9.525 mm (0.375'') respectively. The test bars were 31.75 mm (1.25'') long by 6.35 mm (0.250'') wide by 3.175 mm (0.125'') thick.

The invention will now be described further by way of example with reference to the accompanying drawings in which:

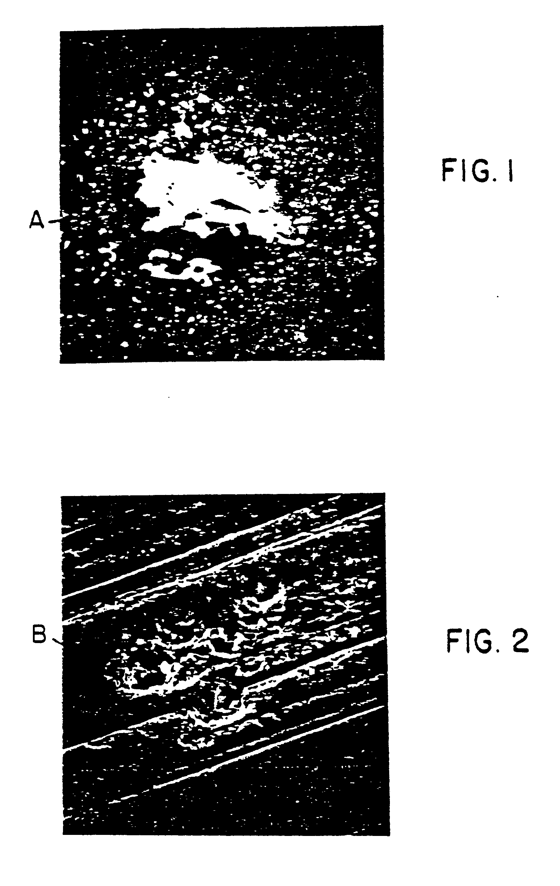

Figure 1 is a photograph (1000 X-magnification) of a silicon nitride material produced in accordance with prior technology, and without the teachings of this invention, i.e., a particle size distribution curve containing particles greater than 16 microns (μm). The photograph illustrates a high concentration of defects, here iron silicide, in the fully hot pressed product, which is a strnegth determining flaw in the final product;

Figure 2 is a photograph of a diamond ground surface of the material of Figure 1 showing in greater clarity the large grain beta silicon nitride particles associated with the presence of iron silicide, a portion having been pulled out as a result of the grinding operation.

To eliminate flaws that might occur in the final product, as illustrated in Figures 1 and 2, the particles that cannot nitride must be eliminated. A considerable amount of such flaws are associated with the presence of free silicon particles after the nitriding step has been completed. These free silicon particles are available to form silicides with the impurities that are present in the starting powder ingredients. When iron silicide is subjected to high temperature, such as in the final nitriding stage and during hot pressing, it forms a liquid into which the alpha silicon nitride dissolves. Cooling or solidification of these iron rich solutions causes a growth of very large sized beta silicon nitride particles surrounded by considerable porosity and consistently associated with the iron silicide solidified adjacent thereto (see Figure 1 at A). Large beta $Si_3N_4$ grains or defects can also be produced by other silicon metal impurities, such as chromium, manganese, etc., in like fashion. These localized areas of silicide, accompanied by large grain beta silicon nitride and porosity (see Figure 2 at B), form a weak area or zone within the final hot pressed product which limits the overall Weibull characteristic strength level (a modulus of rupture) of the silicon nitride material to consistently about 100000 psi or less, and with relatively low associated values (Weibull modulus) of 8 or less. The presence of free silicon is a direct result of inadequate nitriding; nitriding is a diffusion process dependant upon the distance the gas phase must penetrate to obtain chemical reaction. Oxygen is known to reduce nitrogen diffusion and therefore interfere with efficient nitriding of silicon. Oxygen carrying agents used in reaction bonded silicon nitride technology impede this nitriding process. Silicon particles that could be nitrided efficiently in the absence of oxygen carrying agents are found to no longer nitride efficiently in the presence of oxygen carrying agents using state of the art nitriding technology. When there are large sized particles in the mixture, the diffusion distance is not sufficient to entirely penetrate such particles and incomplete nitriding results, allowing such free silicon to remain in isolated pockets within the nitrided product. It is difficult, and in most cases undesirable, to remove impurities within the starting ingredients which may combine with such free silicon. For example, up to 1.0% iron, either as metallic or combined, is present in silicon powder purchased commercially on the open market. The silicon also contains silicon dioxide as an oxide film on each of the grains which impedes the nitriding process and is difficult to strip or reduce. The iron tends to break up the $SiO_2$ film on the silicon, facilitating nitriding. Iron in the form of $Fe_2O_3$ is sometimes added to facilitate the breakup of the $SiO_2$ layers. Moreover, the expense of attempting to purify the starting ingredients beyond that which is commercially available is highly exorbitant and is not a desirable alternative solution.

A preferred method for eliminating such flaws in the final product of a hot pressed silicon nitride body according to the invention herein is as follows.

Forming mixture

1. A mixture of powdered silicon and reactive oxygen carrying powder agents is prepared. The reactive oxygen powder carrying agents is defined herein to mean powder ingredients that are effective to form second phase crystallites, particularly oxynitrides, when reacted with the silicon under a heated nitrogen atmosphere. The powder agents can be advantageously selected from the group consisting of $Y_2O_3$, $Al_2O_3$, MgO, $CeO_2$, $ZrO_2$, $HfO_2$, and other rare earths. Use of these agents will improve physical characteristics and formation of a second phase crystallite which will be uniformly dispersed and substantially displace the detrimental glassy phase normally formed, except for a controlled and limited amount of such glassy phase. For purposes of the preferred method, $Y_2O_3$ and $Al_2O_3$ are used as the reactive oxygen carrying agents, along with $SiO_2$, which is normally inherent as an oxide film on the silicon powder. $Y_2O_3$ is normally required to be present in an amount of about 3—16% by weight of the mixture and $Al_2O_3$ is normally required to be present in an amount of about 0.4—4%. For purposes of the preferred method, a uniform powder mixture is prepared with 2000 grams of silicon (86.6% by weight of the mixture), 278 grams of $Y_2O_3$ (12% by weight of the mixture), and 32 grams of $Al_2O_3$ (1.4% by weight of the mixture for purposes of this invention).

The silicon starting powder that is usually commercially available is 98% pure or greater. The average starting particle size of such silicon powder is usually in the range of 10—20 microns ($\mu m$), which permits particles of 100, 150, and up to 540 microns to be present as well as smaller particles lower than 16 microns. The major trace metal contaminants normally experienced with such commercially available silicon powder include: iron in an amount of 1.0%, aluminum up to 0.5%, manganese up to 0.09%, and calcium up to 0.09%. Nonmetallic contaminants normally include: carbon up to 0.05%, and oxygen less than 0.5%. The yttria is usually available on a commercial market with a purity of 99.99% and average crystal size of about 0.0438 microns (438 angstroms) with particles as large as 40 microns. The alumina usually has a purity of 99.5% and is usually added separately, but can be added by attrition during the milling operation. The alumina will have an average particle size of about 0.3—.5 microns with some particles as large as 50 microns.

Milling to strict particle size control

2. The mixture is then comminuted and blended by being charged into a dry milling apparatus or by being subjected to jet milling. The dry milling normally is carried out by use of a ball milling device, where balls or other equivalent milling media are introduced to the mixture and the apparatus rotated so as to cause the particles to grind against the milling media over an extended period of time. Dry milling has to be coupled with classification to ensure no particles are larger than 16 microns. The wet milling normally is carried out by use of a wet milling device, where balls or other equivalent milling media and a liquid are introduced to the mixture and the apparatus rotated so as to cause the particles to be reduced to the desired size. Jet milling is a method by which the particles are caused to impinge upon each other under jets of gas (air or inert) so as to cause comminution.

For purposes of this preferred method, the mixture is charged into an inert milling jar along with grinding media in the form of Burundum (Regd. Trade Mark) cylinders (85% $Al_2O_3$, 11% $SiO_2$, and 4% other ingredients) for a period of 48 hours at 64 rpm. The mixture is then separated from the media by use of a 10 mesh (2.0 mm) screen. The dry milled mixture is air classified and/or sieved to mixture that no particle in the mixture is greater than 16 microns and optimally no particle should be greater than 3—4.5 microns. The milling is carried out for a sufficient period of time to ensure that no particle in the mixture is greater than 9 microns and optimally no particle should be greater than 3—4.5 microns. In order to determine whether the mixture is of such limited particle size, x-ray sedimentation, centrifugation, sieving, and laser light scattering tests may be employed.

By reducing the absolute maximum particle size, the particle size distribution becomes such that packing efficiency is detrimentally affected. Without the intermingling of somewhat large and small particles, the packing of the entire powder mixture becomes limited. The poor packing does not detrimentally affect the chemical reaction. The thicker preforms that result from a poor particle size distribution results in very long hot pressing strokes.

If a small compression ratio is desired, the poor packing efficiency can be remedied by adding 2—25% of silicon nitride composite powder. This silicon nitride composite will have a particle size distribution which when combined with the silicon mixture will give the desired packing efficiency. The silicon nitride composite is made according to the teachings of this invention (using a maximum particle size of 16 microns or less) for forming a mixture, compacting, and heating to nitride. The nitrided body is then dry milled to the desired particle size distribution. The silicon nitride composite powder must be the same chemistry as the resulting nitrided body without the addition of composite. This ensures a completely homogeneous body with the same chemistry throughout. This homogeneous approach (adding silicon nitride composite of the same chemistry as the resulting nitrided body) eliminates areas of local high silicon nitride concentration without second phase chemistry (low density areas) that is obtained by the addition of silicon nitride to a silicon powder mixture. The larger sized particles of the silicon nitride composite are useful and present no bad effect; no free silicon results from the use of the silicon nitride composite.

Compacting

3. A measured quantity of the milled mixture is then loaded into a cold pressed die arrangement and pressed at ambient conditions by use of typically $9.65 \times 10^3$—$10.3 \times 10^3$ kPa (1400—1500 psi) to form a compact of a size of 15.24—1.52 cm ($6 \times 0.6''$) and a density of about 1.0 $g/cm^3$. With the addition of 2—25% of the silicon nitride composite, the density of the compact becomes at least 1.4 $g/cm^3$.

Heating

4. The compact is heated in a nitriding atmosphere without the use of pressure normally associated with hot pressing to produce a silicon nitride comprising body consisting of the mixed phase (alpha or beta) silicon nitride, at least one dispersed second phase crystallite (silicon oxynitride), 0.2—1% silicate (by weight of the body), and unmeasurable amounts of free silicon and unreacted oxygen carrying agents (here $Y_2O_3$ and $Al_2O_3$). The body will have a size greater than and a density less than the object to be formed. As the result of the use of a critical particle size no greater than 16 microns, conventional nitriding techniques can be used to nitride silicon in the presence of oxygen carrying agents as used in reaction bonded silicon nitride technology.

Because of the use of an absolute maximum particle size of 16 microns, the nitrided body will preferably consist of silicon nitride which has at least 60% alpha phase silicon nitride, 3—15% silicon oxynitride in the $Y_1SiO_2N$ phase, and the remainder silicate glass (which may be theorized to be aluminosilicate).

The resulting thickness of the nitrided bodies will be approximately the same thickness size as that of the compact going into the nitriding step.

Hot pressing

5. The nitrided body is then hot pressed to produce a silicon nitride comprising object of required dimension and density. A pressing fixture having graphite walls is used to carry out the hot pressing. The walls and nitrided body are both coated with a slurry of boron nitride and dried. The pressing fixture with the nitrided body therein is placed in the hot pressing furnace. The heating and pressing is carried out preferably in increments up to the final hot pressing temperature of 1647°C (3000°F) and pressure of $25.5 \times 10^3$ kPa (3700 psi), the latter conditions being maintained until at least 99% or desirably 99.5% of theoretical full density is achieved. This usually requires 0.25—3.0 hours at the hot pressing temperature. The object is then cooled at any rate, even quenched, to room temperature. the resulting hot pressed object will have a strength of level (modulus of rupture) in the range of $1.03 \times 10^6$—$1.31 \times 10^6$ kPa (150000—190000 psi) and a density of the range of 3.28—3.32 $g/cm^3$. The hardness is also increased as a result of the practice of this invention from a typical hardness HR level (45-N scale) of 90 to 92. The system using the silicon nitride additive to the mixture, will experience less side wall drag (between sides of the preforms and the die walls) which will result in less distortion in the final product. The nitrided preforms formed from a mixture containing a silicon nitride composite will exhibit a smaller height dimension for the preforms and thus reduce the hot pressing stroke.

**Claims**

1. A method of making a hot pressed silicon nitride comprising object useful as a cutting tool, comprising the steps of forming a powder mixture of silicon and reactive oxygen carrying agents, compacting said mixture to form a preform, heating said preform in a nitriding atmosphere to substantially fully react the ingredients of said mixture with said atmosphere to form a body consisting substantially of silicon nitride and hot pressing said nitrided body to produce a silicon nitride comprising object of desired dimension and density useful as a cutting tool, characterised in that said mixture is dry or jet milled to an absolute particle size distribution having substantially no particle greater than 16 micrometers and said step of compacting providing the preform having a density of about 1.0 g/cm$^3$.

2. A method as claimed in Claim 1, in which said maximum particle size is 3—4.5 micrometers.

3. A method as claimed in Claim 1 or 2, in which said reactive oxygen carrying agents are selected from the group consisting of $Y_2O_3$, $Al_2O_3$, $ZrO_2$, $CeO_2$, MgO, and other rare earth oxides, each being present in an amount to substantially fully react said silicon upon heating to reactive temperature.

4. A method as claimed in Claim 3, in which the amount of certain of said oxygen carrying agents permitted in said mixture is limited by percentage weight of the mixture to 3.2—16% $Y_2O_3$, and 0.4—4% $Al_2O_3$.

5. A method as claimed in Claim 4, modified in that the mixture additionally contains 2—25% of said mixture $Si_3N_4$ composite powder having a particle size distribution which when combined with the milled mixture of silicon and reactive oxygen carrying agents will give a desired packing efficiency, and being produced from a nitrided article according to this invention and that the resulting mixture is compacted to form a preform having a density of at least 1.4 g/cm$^3$.

6. The object resulting from the practice of Claim 4, having a modulus of rupture (four point flexural strength) in the range of $1.03 \times 10^6$—$1.31 \times 10^6$ kPa (150000—190000 psi) and a hardness HR (45-N) of at least 92.

## Patentansprüche

1. Verfahren zur Herstellung eines heissgepressten, aus Siliciumnitrid bestehenden, also Schneidwerkzeug verwendbaren Artikels, bei dem man nacheinander ein Pulvergemisch aus Silicium und reaktionsfähigen Sauerstoffträgern bildet, dieses Gemisch zu einem Grünling formt, diesen Grünling in einer Nitrieratmosphäre so erhitzt, dass die Bestandteile jenes Gemischs mit dieser Atmosphäre im wesentlichen vollständig unter Bildung eines im wesentlichen aus Siliciumnitrid bestehenden Körpers reagieren, und diesen nitrierten Körper zur Erzeugung eines aus Siliciumnitrid bestehenden, als Schneidwerkzeug verwendbaren Artikels der gewünschten Abmessungen und Dichte heisspresst, dadurch gekennzeichnet, dass dieses Gemisch trokken oder in einer Strahlmühle zu einer absoluten Teilchengrössenverteilung vermahlen wird, die im wesentlichen kein Teilchen grösser als 16 Mikrometer enthält, und jene den Grünling bildende Verdichtungsstufe auf eine Dichte von etwa 1,0 g/cm$^3$ erfolgt.

2. Verfahren nach Anspruch 1, worin besagte maximale Teilchengrösse 3—4,5 Mikrometer beträgt.

3. Verfahren nach Anspruch 1 oder 2, worin man besagte reaktionsfähige Sauerstoffträger aus der $Y_2O_3$, $Al_2O_3$, $ZrO_2$, $CeO_2$, MgO und andere seltene Erdoxyde umfassenden Gruppe auswählt, wobei diese jeweils in einer solchen Menge vorliegen, dass sie beim Erhitzen auf die Reaktionstemperatur im wesentlichen vollständig mit dem Silicium reagieren.

4. Verfahren nach Anspruch 3, worin die Menge solcher in diesem Gemisch zulässiger Sauerstoffträger auf 3,2 bis 16 Gewichtsprozent $Y_2O_3$ und 0,4—4 Gewichtsprozent $Al_2O_3$ im Gemisch beschränkt ist.

5. Verfahren nach Anspruch 4, so abgeändert, dass das Gemisch ferner 2—25%, bezogen auf jenes Gemisch, an $Si_3N_4$-Verbundpulver enthält, das eine Teilchengrössenverteilung aufweist, die beim Kombinieren mit dem gemahlenen Gemisch aus Silicium und reaktionsfähigen Sauerstoffträgern eine gewünschte Packungsdichte ergibt, und aus einem erfindungsgemässen nitrierten Artikel hergestellt ist, und dass das so erhaltene Gemisch zu einem Grünling mit einer Dichte von mindestens 1,4 g/cm$^3$ verdichtet wird.

6. Gemäss dem Verfahren nach Anspruch 4 hergestellter Artikel mit einem Bruchmodul (Vierpunktbiegefestigkeit) im Bereich von $1,03 \cdot 10^6$—$1.31 \cdot 10^6$ kPa (150 000—190 000 psi) und einer Härte HR (45-N) von mindestens 92.

## Revendications

1. Procédé de préparation d'un article en nitrure de silicium pressé à chaud, tel qu'un objet utilisable comme outil de coupe, dans lequel on forme un mélange pulvérulent de silicium et d'agents réactifs porteurs d'oxygène, on compacte ledit mélange pour former une ébauche, on chauffe ladite ébauche dans une atmosphère nitrurante pour faire réagir à peu près complètement les ingrédients dudit mélange avec ladite atmosphère et former un corps consistant essentiellement en nitrure de silicium, et on presse à chaud ledit corps nitruré pour produire un article en nitrure de silicium tel qu'un objet d'une taille et d'une masse volumique souhaitées utilisable comme outil de coupe, caractérisé en ce qu'on broie à sec ou par jet de gaz ledit mélange jusqu'à une distribution granulométrique absolue ne comportant à peu près aucune particule plus grosse que 16 micromètres et en ce que ledit compactage procure une masse volumique d'environ 1,0 g/cm$^3$ à l'ébauche.

2. Procédé suivant la revendication 1, dans lequel ladite taille particulaire maximum est de 3 à 4,5 micromètres.

3. Procédé suivant la revendication 1 ou 2, dans lequel lesdits agents réactifs porteurs d'oxygène sont choisis parmi $Y_2O_3$, $Al_2O_3$, $ZrO_2$, $CeO_2$, MgO et d'autres oxydes de terre rare, chacun de ceux-ci étant présents en une quantité suffisante pour réagir à peu près complètement avec ledit silicium au moment du chauffage à la température de réaction.

4. Procédé suivant la revendication 3, dans lequel la quantité de certains des agents porteurs d'oxygène présents dans ledit mélange, est limitée à 3,2—16% d'$Y_2O_3$ et 0,4—4% d'$Al_2O_3$, en pourcentage en poids par rapport au mélange.

5. Procédé suivant la revendication 4, qui est modifié par addition au mélange de 2 à 25% par rapport audit mélange d'une poudre composite de $Si_3N_4$ ayant une distribution granulométrique telle que lorsqu'elle est combinée avec le mélange broyé de silicium et d'agents réactifs porteurs d'oxygène procure l'efficacité de compactage requise, cette poudre étant produite à partir d'un article nitruré selon la présente invention, le mélange résultant étant compacté pour former une ébauche ayant une masse volumique d'au moins 1,4 g/cm³.

6. Objet résultant de la mise en oeuvre du procédé de la revendication 4, ayant un module de rupture (résistance à la flexion en 4 points) situé dans la plage allant de $1,03\times10^6$ à $1,31\times10^6$ kPa (150 000—190 000 psi) et une dureté HR (45-N) d'au moins 92.

FIG. 1

FIG. 2